**Europäisches Patentamt**

**European Patent Office**

**Office européen des brevets**

(11) Publication number: **0 250 008**
**A1**

# EUROPEAN PATENT APPLICATION

(21) Application number: **87200670.5**

(22) Date of filing: **08.04.87**

(51) Int. Cl.⁴: **H 02 P 7/628,** H 02 M 5/27

(30) Priority: **09.04.86 NL 8600893**

(43) Date of publication of application: **23.12.87**
**Bulletin 87/52**

(84) Designated Contracting States: **AT BE CH DE ES FR GB GR IT LI LU NL SE**

(71) Applicant: **Nederlandse Organisatie voor Toegepast Natuurwetenschappelijk Onderzoek TNO, P.O. Box 297, NL-2501 BD Den Haag (NL)**

(72) Inventor: **Kok, Hermanus Johannes George, 2e Johannastraat 34, NL-7331 CH Apeldoorn (NL)**
Inventor: **Abrahams, Johannes, Thomas van Aquinostraat 5, NL-7323 JA Apeldoorn (NL)**

(54) Method and apparatus for halving the rotational speed of an electromotor.

(57) A method and apparatus for halving the rotational speed of an electromotor, in which a supply voltage of a certain frequency is converted into a voltage having half the effective value and with half the frequency. The slower-running motor will continue to provide the same torque and few losses will arise in the frequency-divider and the motor itself. The apparatus is particularly applicable to compressor motors.

EP 0 250 008 A1

TITLE MODIFIED        -1-

see front page

A METHOD AND APPARATUS FOR HALVING THE ROTATIONAL SPEED OF
AN ELECTROMOTOR.

The invention relates to a method for halving the rotational speed of an alternating-current motor. Various methods and their associated regulators are known for regulating the rotational speed of electromotors. A simple regulator for example is one in which phase-splitting is used. This principle can only be used with electromotors which also have lower torque-outputs at lower speeds such as is the case for example with ventilator fan-motors. In order to regulate the rotational speed of three-phase alternating-current motors which must provide a constant-torque output, such as in the case of motors for refrigerator compressors for example, use can only be made of frequency-regulation and the frequency-regulators associated therewith.

The existing frequency-regulators operate as follows: Firstly they convert an alternating-current into a direct-current and thereafter convert the latter back into an alternating-current again, but in this case with the desired frequency and built up with square-wave pulses. A disadvantage of these frequency-regulators is that they are relatively dear , especially in the case of smaller power capacities (up to a few kW). Furthermore, account must be taken of the energy used by the frequency-regulator itself and which is the result of the use of power-electronics. In the case where the rotational speed of an alectromotor need not be continuously regulatable, for example when only a rotational speed lower than the nominal speed is demanded and for exampke to drive an installation more evenly, then it is advantageous to do this in "one step" and to bring the rotational speed down to a half of the nominal speed for example. On the bases of supply frequencies of 50 and 60 Hz , these frequencies are thus reduced to 25 and 30 Hz respectively.

Such a method is known from American patent No.3300708 for example and which describes the manner in which one and other requirements are achieved with the aid of a transformer and such that the desired voltage is available at the output of the secondary winding. The disadvantage is however that energy losses arise in the transformer.

It is the object of the invention to provide a method and the associated apparatus for halving the frequency of the supply-voltage for an electromotor whilst no, or hardly any, energy losses arise either in the electronic components or the electromotor itself. The invention is characterised by the fact that the motor supply is built up in such a manner ; with the aid of a combination ·· thyristors that only the semi-sinusoidal voltage components of like polarity are passed from the external voltage source and that the thyristors are controlled in such a manner that each second, fourth etc of the voltage components is applied to the motor with a polarity opposite to that with respect to the motor and through which the motor is driven by the voltage waveform thus obtained.

It is easy to see that, by the use of the method according to the invention, the root mean square value is halved. On the basis of 220 volt supply having a frequency of 50 Hz for example, this would be converted to an effective voltage of 110 which is almost sinusoidal in form and with a frequency of 25 Hz.

The invention also comprises an apparatus for carrying out the said method. According to the invention, this apparatus comprises thyristor circuits together with the electronics for controlling the thyristors and in which the current for an electromotor is drawn from an external voltage source and the required voltage waveform across the motor is achieved by means of alternately controlling the first and third, and the second and fourth thyristors respectively.

The thyristor-control to be used is known in itself just as is the thyristor-control that can be used to operate the thyristor circuitry.

When the supply voltage _ fed to an electromotor via an apparatus according to the invention is compared to that which is provided by the so-called phase-splitting speed regulators, the former appears to have a better sinusoidal form than the latter. Through this, part of the higher harmonic components of the voltage obtained are removed. This results in less energy-losses in the electromotors, less interference to the external voltage and less noise generation.

French Patent Specification No. 2139139 describes a method and and the associated apparatus therefor which are akin to to those according to the invention: in the latter case also, an output voltage from the apparatus is achieved with a halved frequency, but here the effective voltage remains the same as the voltage from the external voltage source. When a motor is driven to provide an approximately constant mechanical torque this known method is consequently unsuitable for this requirement.

The method and the apparatus according to the invention are particularly applicable to short-circuited armature motors in which halving of the rotational speed offers advantages such as in pump and ventilator-fan motors.

More particularly, thought is given to hermetically and semi-hermatically sealed compressor motors such as those used in the refrigerating technique for example. Compressors such as these with capcities smaller than a few kW do not have other possibilies at their disposal to regulate power-output capacity other than ON/OFF regulation or power-output dissipation. Many refrigerating installations only run for a limited number of hours each day (winter time) for a major part of the year. By allowing the compressor to run at only half speed , the evaporation and condensation temperatures of the refrigerating medium come to lie closer to one another and through which the refrigerating capacity can be generated to give a higher yield ( for example in the cases of domestic refrigerators, refrigerating and freezing display cabinets, compact refrigerating cells and air-conditioning systems). Refrigerating compressors in a particular refrigerating installation generally require a constant torque output irrespective of the rotational speed. This means that the required supply-voltage for the electromotor must be approximately proportional to the desired rotational speed. The voltage generated according to the method of the invention satisfies this requirement.

Naturally the method and apparatus according to the invention can be applied in a plural form in the sense that voltages having frequencies of one-quarter and one-eighth of that of the external voltage source can be achieved.

By for example applying these frequencies to a three-phase motor in the reverse consecutive order, such a motor can be bro- slowly up to its nominal rotational speed without a large star- current arising.

A particular embodiment of the invention is an apparatus in which the second of the pairs of thyristors is supplemented with two extra thyristors and extra controlling-electronics by which means the electromotor can be driven both by the undivided external supply-voltage and the voltage waveform generated by the meth according to the invention.

The invention is now to be described further with reference to figures I to 5 inclusive of the accompanying drawings in which:

Fig.I depicts the external voltage source as a function of time.

Fig.2 depicts the voltage across the motor terminals as a function of time.

Fig.3 illustrates schematically an embodiment of the apparatus.

Fig.4 illustrates schematically an embodiment of controlling-electronics and;

Fig.5 depicts , as a function of time, the voltages of the various functional-elements of fig.4.

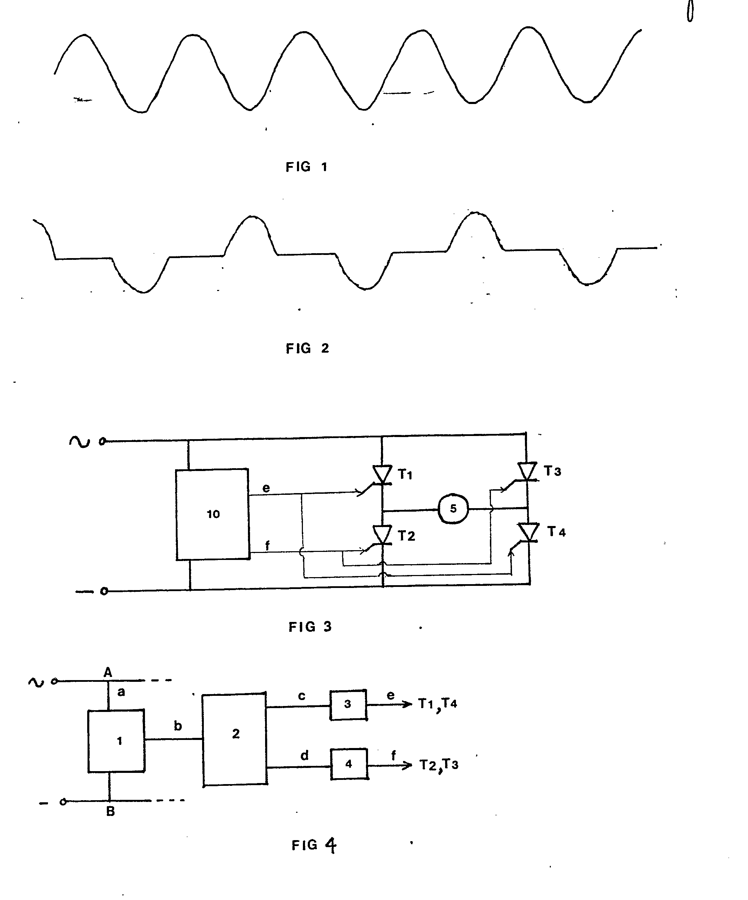

Fig.I depicts the waveform of the external supply voltage from the grid. Fig.2 shows the waveform of the voltage appearing across the terminals of the electromotor and as modified with the aid of the apparatus schematically illustrated in fig.3. This reasonably approximates a sinewave and furthermore depicts the effective voltage which is half the original voltage the waveform of which is depicted in fig.I.

In fig.3, the controlling-electronics are indicated by the reference numeral IO and are further to be described later herein with reference to fig.4. Both thyristors of pairs formed from thyristors TI,T2,T3 and T4 are activated simultaneously and the pairs alternately by output signals from the apparatus of fig.3. and thus, as illustrated in the example, TI and T4 together and T2 and T3 together. This arrangement of the thyristors in circuit ensures that the electromotor 5 is driven from a supply source having a frequency and voltage waveform as illustrated in fig.2.

Fig.4 illustrates the controlling-electronics IO of fig.3 and which comprises elements I,2,3 and 4 which determine and ensure the correct switching order of the thyristors. Points A and B are connected to the phase and neutral lines of the external supply-voltage depicted in fig.I. The functional elements of the controlling-electronics are formed by a zero-input detector I and a flip-flop circuit in the form of a sub-divider and a two-condition logic NAND - gate including inversion facilities 3 and 4. In this arrangement, the element 3 effects control of thyristors of the pair TI and T4 of fig.3 which pass the positive half of the sinusoidal voltage components appearing at the electromotor.

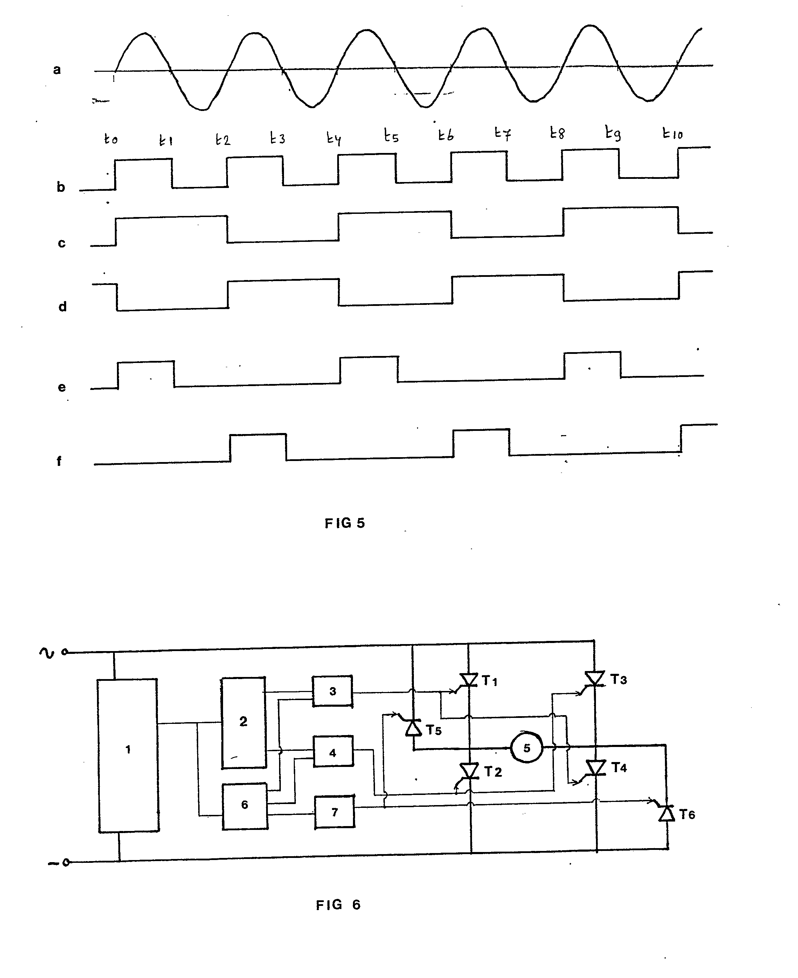

Fig.5 shows the course taken by the voltage during the time occupied by the different input/output signals (a to f inclusive of fig.4) of the functional elements I,2,3 and 4 of the controlling-electronics of fig.4. The external supply-voltage 5a is fed to the zero-input detector I of fig.4. For each positively-going zero-input from 5a, thus at times t0,t2,t4 etc. from 5b, the zero-output detector gives a positive-pulse output extending over a time-interval equal to a half-period of the external supply-voltage. Fig.5 shows the uninverted output from the flip-flop circuit c of fig.4. Fig. 5d shows the inverted output of the flip-flop circuit d of fig.4. Fig. 5e shows the controlling waveform for the pair of thyristors TI and T4 of fig.3. and fig.5f shows the controlling waveform for the pair of thyristors T2 and T3 of fig.3.

Fig.6 illustrates schematically a particular embodiment of an apparatus including controlling-electronics by which means an electomotor 5 can be driven as required by the situation from either an external supply-voltage ( 220V/50 Hz for example) or from as supply voltage resulting from the employment of the method according to the apparatus illustrated in figs. 3 and 4. With respect to the apparatus illustrated in figs 3 and 4, two extra thyristors T5 and T6 are incorporated in the arrangement illustrated in fig.6.

In addition hereto, a logic-processing unit 6 is also incorporated and which has three functions when the external supply-voltage is undivided and namely:

- inhibiting operation of the controlling element 4 for the pair of thyristors T3 and T4;

- passing the undivided pulse-frequency (fig.5b) to the controlling element 3 for the pair of thyristors TI and T4.

- passing the uninverted portion of the undivided pulse-frequency to the controlling element 7 for the pair of thyristors T5 and T6.

In this manner, all positive half-sinusoidal waveform components of the voltage from the external source are applied to the motor terminals via the pair of thyristors TI and T4 and all negative half-sinusoidal waveform portions of the voltage via the pair of thyristors T5 and T6.

The changeover from one method of driving the motor to the other is achieved by means of an external or internal control-signal.

What we claim is:

1. A method of halving the rotational speed of an alternating-current electromotor in which the effective motor voltage is halved simultaneously whilst maintaining the nominal torque and characterised in this, that the motor supply-voltage is built up in such a manner with the aid of a combination of thyristors that only the semi-sinus voltage components of like polarity are passed from the external voltage source and in which the thyristors are controlled in such a manner that each second, fourth etc. of these voltage components is applied to the motor with a polarity opposite to that with respect to the motor and through which the motor is driven by the voltage waveform thus obtained.

2. Apparatus for carrying out the method as claimed in claim I comprising four thyristor-circuits together with the electronics for controlling the thyristors and in which the current for an electromotor is drawn from an external voltage source and the required voltage waveform across the motor is achieved by means of alternately controlling the first and third, and the second and fourth thyristors respectively.

3. An electromotor provided with an apparatus as claimed 2.

4. A method in which the apparatus as claimed in claim 2 is applicable in a plural form in the sense that voltages having frequencies of one-quarter and one-eighth of that of the external voltage source can be achieved and characterised in this, that these frequencies can be applied to a three-phase motor in the reverse consecutive order to bring the motor slowly up to its nominal rotational speed.

5. Apparatus as claimed in claim 2 supplemented with two extra thyristors and extra controlling-electronics and in which the electromotor can be driven both in accordance with claim 3 and in a manner in which all positive and negative sinusoidal voltage components from the external voltage source are applied to the electromotor which then in fact has the undivided external supply-voltage for application thereto.

6. An electromotor provided with the apparatus as claimed in
   claim 3.

0250008

FIG 1

FIG 2

~

10

e

f

T1

T2

5

T3

T4

FIG 3

~

A

a

B

1

b

2

c

3

e

T1,T4

d

4

f

T2,T3

FIG 4

a

t0  t1  t2  t3  t4  t5  t6  t7  t8  t9  t10

b

c

d

e

f

**FIG 5**

**FIG 6**

European Patent Office

**EUROPEAN SEARCH REPORT**

Application number

EP 87 20 0670

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 300 708 (DIELECTRIC PRODUCTS) <br> * Column 1, lines 1-14; figure 3 * | 1 | H 02 P 7/628 <br> H 02 M 5/27 |
| X | FR-A-2 139 139 (INT. STANDARD) <br> * Claim 1; figures 1,2 * | 1 | |
| X | FR-A-2 150 247 (UNELEC) <br> * Claim 1; figures 1,2 * | 1 | |
| A | US-A-3 718 854 (ELECTROSPACE) <br> * Abstract; figures 1,2 * | 1 | |
| A | US-A-4 300 077 (ASTRO DYNAMICS) <br> * Abstract; figure 2 * | 1 | TECHNICAL FIELDS SEARCHED (Int. Cl.4) |
| A | US-A-3 579 086 (P. LEBENBAUM) <br> * Abstract; figure 2c * | 1 | H 02 P <br> H 02 M |

The present search report has been drawn up for all claims

| Place of search | Date of completion of the search | Examiner |
|---|---|---|
| THE HAGUE | 04-08-1987 | ZAEGEL B.C. |